# EUROPEAN PATENT APPLICATION

(11) **EP 4 822 942 A1**
(43) Date of publication of application: **14.10.2026**
(21) Application number: 25223373.9
(22) Date of filing: 15.12.2025
(51) Int. Cl.: H02J 7/70, H02J 50/10

(54) **CHARGING APPARATUS FOR PORTABLE COMPONENT**

(30) Priority: 10.04.2025 CN 202510450541
(71) Applicant: Beijing Zitiao Network Technology Co., Ltd., Beijing 100190 (CN)
(72) Inventor: QIU, Wentao, Beijing 100028 (CN); CHENG, Fangyu, Beijing 100028 (CN)
(74) Representative: Marks & Clerk LLP

(57) **Abstract**

Embodiments of the present disclosure provide a charging apparatus for a portable component. The charging apparatus includes: a base (2) including a charging platform (21) and a charging structure disposed on the charging platform; a top cover (3) including a coupling surface (31), a receiving cavity (32) recessed from the coupling surface and an upper surface (33) axially opposite to the coupling surface, the receiving cavity being adapted to at least receive the portable component; and a flexible connector (1) connecting the base and the top cover, and allowing one of the base and the top cover to flip relative to the other, to switch the charging apparatus between a charging case mode and a charging base mode, where in the charging case mode, the coupling surface of the top cover abuts against the charging platform, and in the charging base mode, the upper surface of the top cover abuts against a bottom surface (23).

## Description

### FIELD

Example embodiments of the present disclosure generally relate to the field of charging and energy supplement apparatuses, and in particular, to a charging apparatus for a portable component.

### BACKGROUND

As a new type of wearable device, portable components are becoming an indispensable part of people's lives thanks to their lightweight design, versatility and stylish appearance. Conventional portable component charging apparatuses are adapted to a corresponding charging case or charging base according to different diameters of portable components, and positioning and fixing of the portable component are achieved through a foolproof concave-convex structure of a charging protrusion, and energy is supplemented by means of a charging pin or wireless charging.

### SUMMARY

In a first aspect of the present disclosure, a charging apparatus for a portable component is provided. The charging apparatus includes: a base including a charging platform and a charging structure disposed on the charging platform, the charging structure being adapted to couple with the portable component to charge the portable component; a top cover including a coupling surface, a receiving cavity recessed from the coupling surface and an upper surface axially opposite to the coupling surface, the receiving cavity being adapted to at least receive the portable component; and a flexible connector connecting the base and the top cover and allowing one of the base and the top cover to flip relative to the other, to switch the charging apparatus between a charging case mode and a charging base mode, where in the charging case mode, the coupling surface of the top cover abuts against the charging platform of the base, and in the charging base mode, the upper surface of the top cover abuts against a bottom surface of the base.

In some embodiments, a first end of the flexible connector is connected to a peripheral outer edge of the base and a side axially close to the charging platform, and a second end of the flexible connector is connected to a peripheral outer edge of the top cover and a side axially close to the coupling surface.

In some embodiments, the charging apparatus further includes: a connecting cable disposed in the flexible connector to at least electrically connect electronic devices in the base and the top cover.

In some embodiments, the base further includes: a charging magnetic member disposed in the charging structure and adapted to couple with a magnetic member in the portable component to position the portable component.

In some embodiments, the charging structure includes at least one of: a charging protrusion protruding outward from the charging platform; a charging slot recessed inward from the charging platform; or a charging surface flush with a surface of the charging platform.

In some embodiments, an outer diameter of the charging protrusion is smaller than inner diameters of portable components of various specifications.

In some embodiments, the charging structure further includes: a pair of charging pins adapted to contact with a charging interface of the portable component to charge the portable component.

In some embodiments, the pair of charging pins are arranged along an axial direction of the charging protrusion and disposed on a side of the charging protrusion close to the flexible connector at a distance from each other.

In some embodiments, the base further includes: a charging coil disposed in the charging structure and adapted to couple with a receiving coil in the portable component to charge the portable component.

In some embodiments, the charging apparatus further includes: a plurality of mating magnetic members respectively disposed in the base and the top cover, and disposed adjacent to at least one of the coupling surface of the top cover and a charging platform of the base and adjacent to at least one of the upper surface of the top cover and the bottom surface of the base, to hold the charging apparatus in the charging case mode or the charging base mode by magnetic attraction.

In some embodiments, the coupling surface of the top cover has a same shape and a same area as the charging platform, and the upper surface has a same contour as the bottom surface.

In some embodiments, the charging apparatus further includes: an energy storage battery disposed in at least one of the base and the top cover to charge the portable component.

In some embodiments, a charging interface is disposed on a side of the top cover close to the flexible connector and is adapted to connect to an external charging cable.

In some embodiments, the flexible connector is a flat cable, and a through hole is disposed on a side close to the top cover and is adapted to allow the charging cable to pass through to connect to the charging interface.

In some embodiments, the charging apparatus further includes: a light-transmitting area formed on the base; and an indicator light disposed in the base and adjacent to the light-transmitting area to indicate an operating state of the charging apparatus to an exterior through the light-transmitting area.

In some embodiments, the light-transmitting area includes a transparent area, a semi-transparent area or a light-transmitting hole formed in the charging platform of the base.

It should be understood that the content described in the content part is not intended to limit key features or important features of embodiments of the present disclosure, nor is it intended to limit the scope of the present disclosure. Other features of the present disclosure will become readily understood through the following description.

### BRIEF DESCRIPTION OF THE DRAWINGS

The above and other features, advantages and aspects of the embodiments of the present disclosure will become more apparent in combination with the drawings and with reference to the following detailed description. In the drawings, the same or similar reference numbers refer to the same or similar elements, where:
Fig. 1 shows a three-dimensional schematic view of a charging case mode of a charging apparatus according to embodiments of the present disclosure;
Fig. 2 shows a three-dimensional schematic view of a charging base mode of the charging apparatus according to embodiments of the present disclosure;
Fig. 3 shows a three-dimensional schematic view of a state where the charging apparatus according to embodiments of the present disclosure is unfolded by 180°;
Fig. 4 shows a side view of the charging case mode of the charging apparatus according to embodiments of the present disclosure; and
Fig. 5 shows a side view of the state where the charging apparatus according to embodiments of the present disclosure is unfolded by 180°.

### DETAILED DESCRIPTION OF EMBODIMENTS

Hereinafter, embodiments of the present disclosure will be described in more detail with reference to the drawings. Although some embodiments of the present disclosure are shown in the drawings, it should be understood that the present disclosure may be implemented in various forms and should not be construed as limited to embodiments set forth herein. Instead, these embodiments are provided for a more thorough and complete understanding of the present disclosure. It should be understood that the drawings and embodiments of the present disclosure are only for illustrative purposes, and are not intended to limit the scope of protection of the present disclosure.

It should be noted that the titles of any section/sub-section provided herein are not restrictive. Various embodiments are described throughout this article, and any type of embodiment may be included under any section/sub-section. In addition, embodiments described in any section/sub-section may be combined in any way with any other embodiments described in the same section/sub-section and/or different section/sub-section.

In the description of embodiments of the present disclosure, the term "include/comprise" and similar terms should be understood as open-ended inclusions, that is, "include/comprise but not limited to". The term "based on" should be understood as "based at least in part on". The term "an embodiment" or "the embodiment" should be understood as "at least one embodiment". The term "some embodiments" should be understood as "at least some embodiments". Other explicit and implicit definitions may also be included below. The terms "first", "second", etc. may refer to different or same objects. Other explicit and implicit definitions may also be included below.

As mentioned above, the conventional portable component charging apparatus is a single mode in a form of a charging case or a form of a charging base. The charging apparatus in the form of a charging case lacks artistry when placed on a desktop, and the charging apparatus in the form of a charging base lacks portability when traveling. Therefore, it is difficult for the conventional portable component charging apparatus to balance the requirements of desktop aesthetics and portability when traveling. In addition, the conventional portable component needs to be actively positioned with a charging structure, which is not intuitive enough, and one charging case or charging base cannot be compatible with portable components of different sizes.

Although this design can ensure compatibility and use experience, it also brings significant production and sales challenges. First of all, in the production process, it is necessary to develop molds and adjust production lines separately for each size of portable component, which undoubtedly increases the complexity and cost of manufacturing. Secondly, in terms of sales and inventory management, merchants need to stock up and manage a variety of different specifications of charging cases at the same time, which not only increases warehousing costs, but also increases the difficulty of supply chain management. In addition, for consumers, choosing a charging case that suits the size of their portable device may become less intuitive, further affecting the purchase experience. Therefore, while improving the functionality of the product, this one-to-one adaptation solution also brings additional management costs and challenges to production, sales and marketing.

In order to solve or at least partially solve the above problems or other potential problems of the portable component charging apparatus of the traditional solution, embodiments of the present disclosure provides a charging apparatus for a portable component. In the description of the present disclosure, the term "portable component" should be understood broadly, and it is intended to cover any miniaturized electronic device or its component that is suitable for energy supplement using the charging apparatus according to embodiments of the present disclosure and that may be carried around by the user. Although some specific embodiments of the present disclosure may be described by taking a smart ring as an example of a "portable component", this is not intended to limit the scope of protection of the present disclosure to the smart ring. Specifically, the "portable component" is not limited to a ring-shaped device, but may include, but is not limited to, the following types of devices: a wearable device such as a smart ring, a smart watch, a fitness tracker/smart bracelet, a smart ear-worn device, smart glasses or smart jewelry; a small portable electronic device such as an electronic tracker/tag, a portable medical monitoring device, a small remote control, an electronic stylus, etc.; or other miniaturized electronic products that need to be charged and that may be easily carried by the user or a detachable charging module thereof.

In the present disclosure, the term "axial" refers to a direction or position along or parallel to an imaginary centerline. This centerline is a main longitudinal axis of the charging apparatus according to embodiments of the present disclosure. Therefore, in the present disclosure, when describing a relative position or movement between two or more components, the "axial" direction refers to the direction along the center axis, which is distinguished from a "radial" direction perpendicular to the axis. For example, in combination with the description of the present disclosure, "axial" here refers to an imaginary centerline along the thickness direction of the charging apparatus.

According to the solution of embodiments of the present disclosure, the charging apparatus can be freely switched between the charging case mode and the charging base mode, which satisfies the artistry of the desktop ornament and the portability of travel storage. Further, the top cover and the base are connected by a soft connector, which is convenient to open and close, and meets the requirement of 360° flipping of the top cover. Moreover, the soft connector is internally provided with a connecting cable, thus realizing a simple and elegant hardware structure. Further, in some embodiments, the charging structure may be internally provided with a charging magnetic member, which is more convenient to guide the positioning of the portable component.

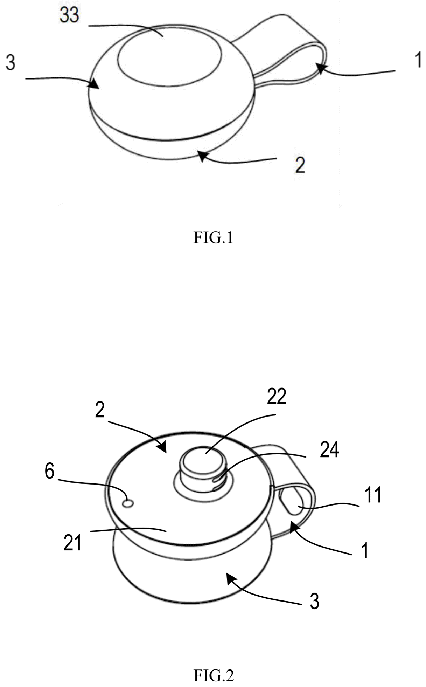

An example structure of a charging apparatus of a portable component will be described below with reference to FIG. 1 to FIG. 5. The charging apparatus of the portable component according to embodiments of the present disclosure generally includes a base 2, a top cover 3 and a flexible connector 1.

The base 2 includes a charging platform 21 and a charging structure disposed on the charging platform. In some embodiments, the charging platform 21 and a bottom surface 23 are disposed on two axial sides of the base 2 parallel to each other. The charging structure is coupled with the portable component 1 placed on the charging platform 21 to charge the portable component. In some embodiments, a centerline of the charging structure may have a certain distance from a centerline of the charging platform 21, that is, the charging structure may be disposed at a position deviating from the centerline of the charging platform 21. In this way, the charging structure is disposed on the open charging platform 21, which can provide more flexible placement space for portable components of different sizes, and is simple and convenient to operate.

The top cover 3 includes a coupling surface 31, a receiving cavity 32 recessed from the coupling surface 31, and an upper surface 33 axially opposite to the coupling surface 31. In some embodiments, similar to the charging platform 21 and the bottom surface 23, the coupling surface 31 and the upper surface 33 are axially disposed on two sides of the top cover 3 parallel to each other. In this way, a simple and symmetrical overall appearance of the base 2 and the top cover 3 is formed respectively.

The receiving cavity 32 may at least receive the portable component. The receiving cavity 32 has an inner conical or partially spherical cavity. That is, an inner peripheral surface of the receiving cavity 32 may have an inclined or spherical structure, so that a radial dimension of an open end of the receiving cavity 32 is larger than a radial dimension of a bottom surface of the receiving cavity 32. In this way, the inclined or spherical inner peripheral surface may provide a limit for the portable component received therein, thereby improving the reliability of receiving the portable component. In some embodiments, at least an inner peripheral surface portion of the receiving cavity 32 may be made by an elastically deformable material, so as to facilitate holding the portable component therein. In addition, in some embodiments, the diameter of the receiving cavity 32 may be larger than the diameters of the portable components of various specifications. In this way, the charging case can accommodate portable components of different sizes.

The flexible connector 1 connects the base 2 and the top cover 3, and allows one of the base 2 and the top cover 3 to flip relative to the other. For example, in some embodiments, the flexible connector 1 may be flexible silica gel. Since the opening and closing actions of the charging apparatus belong to low-frequency operations, the requirements for opening and closing consistency are not high. In this case, the flexible silica gel can not only easily realize the opening and closing functions of the top cover 3 and the base 2, but also bring additional practical advantages. It allows the connecting cable to be integrated therein, thereby further improving the integration of the entire charging apparatus, which will be further explained below. This design makes it difficult for the top cover 3 or the base 2 to disengage or be lost when flipped over for use, and at the same time increases the function of electrically connecting the electronic devices in the top cover 3 and the base 2, which not only simplifies the structure, but also improves the convenience and durability of use, and brings higher flexibility and reliability to the overall product.

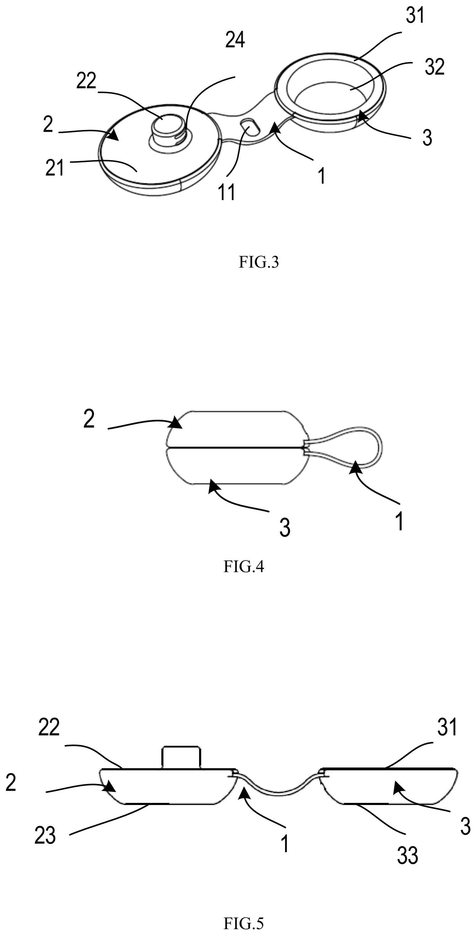

The flexible connector 1 allows one of the base 2 and the top cover 3 to flip relative to the other to switch the charging apparatus between the charging case mode and the charging base mode. In the charging case mode, the coupling surface of the top cover 3 abuts against the charging platform 21 of the base 2. In the charging base mode, the upper surface of the top cover 3 abuts against the bottom surface of the base 2. That is, by means of the flexible connecting material, the top cover 3 may be flipped relative to the base 2, the base 2 may also be flipped relative to the top cover 3, and the top cover 3 may be flipped relative to the base 2 by 0~360°. Fig. 3 and Fig. 5 show the case where the top cover 3 is flipped relative to the base 2 by 180°, and Fig. 2 shows the case where the top cover 3 is flipped relative to the base 2 by 360°. In this way, different surfaces of the top cover 3 and the base 2 are in contact to switch different modes of the charging apparatus.

As shown in Fig. 1, in the charging case mode, the charging apparatus presents a closed box state, and at this time, the charging apparatus may be fixed on a key ring, a handbag and other items as a portable pendant. In this mode, the portable component may be carried around in the charging case (accommodated in the accommodating cavity 32). In the charging case mode, the charging apparatus may be presented in the charging base mode by flipping the top cover 3 and the base 2 relative to each other. As shown in Fig. 2, in the charging base mode, the top cover 3 supports the base 2 to form a desktop ornament. In this way, the charging apparatus may be freely switched between the charging case mode and the charging base mode, which not only increases the artistry when placed, but also meets the portability requirements of travel storage, thus balancing the requirements of "desktop aesthetics" and "portability when traveling".

In some embodiments, as shown in Fig. 4, one end (hereinafter referred to as a first end) of the flexible connector 1 is connected to a peripheral outer edge of the base 2 and a side axially close to the charging platform 21, and a second end of the flexible connector 1 is connected to a peripheral outer edge of the top cover 3 and a side axially close to the coupling surface 31. In some embodiments, whether in the charging case mode or the charging base mode, an axis of the base 2 is coincident with an axis of the top cover 3, and the flexible connector 1 is disposed on a same side of the base 2 and the top cover 3 in the axial direction. In the charging base mode, both ends of the flexible connector 1 provide a sufficient distance in the axial direction to facilitate the passage of the charging cable. This design is not only efficient and compact in terms of space utilization, but also excellent in terms of stability and reliability of connection, providing users with a stable and long-lasting use experience.

In some embodiments, as mentioned above, the charging apparatus may further include a connecting cable. The connecting cable is disposed in the flexible connector 1 and may at least connect electronic devices in the base 2 and the top cover 3. The connecting cable can connect the electronic devices in the top cover 3 and the base 2. In this way, the connecting cable is hidden in the flexible connector, making the structure of the charging apparatus simpler and more elegant, thereby improving reliability and mass producibility.

In some embodiments, the base 2 may further include a charging magnetic member. The charging magnetic member is disposed in the charging structure and can be coupled with the magnetic member in the portable component to position the portable component. In this way, the magnetic force of the charging magnetic member automatically aligns and positions, ensuring that the portable component can be quickly and accurately coupled to the charging structure, and avoiding the problem of low charging efficiency or inability to charge due to inaccurate position.

In some embodiments, the charging structure may include at least one of a charging protrusion, a charging slot or a charging surface. In some embodiments, the charging structure may include a charging protrusion protruding outward from the charging platform, for example, as shown in Fig. 2. The charging protrusion shown in Fig. 2 may have a columnar structure and is adapted to pass through the portable component 1 placed on the charging platform 21 to charge the portable component. In some embodiments, the height of the charging protrusion may be greater than or equal to the height of the portable component 1 of various specifications. In some embodiments, in the axial direction, the height of the receiving cavity 32 may be greater than or equal to the height of the charging protrusion 22.

Certainly, it should be understood that the charging protrusion in the charging apparatus according to embodiments of the present disclosure may not be limited to the example structure shown in Fig. 2. In some alternative embodiments, the charging protrusion may also have other any appropriate shapes, including but not limited to other any appropriate shapes such as an inclined columnar shape, a conical shape, a truncated conical shape, a hemispherical shape, etc. In addition, the number of charging protrusions may not be limited to one, and may be multiple. In some embodiments, the outer diameter of the charging protrusion 22 may be smaller than the inner diameters of the portable components of various specifications. The traditional charging case or charging base cannot be compatible with all portable components, and it is necessary to design bases of different sizes to match the portable components of different sizes. In contrast, the charging protrusion 22 is arranged on the base, and the outer diameter of the charging protrusion 22 is smaller than the inner diameters of the portable components of different sizes, so that the charging protrusion may be adapted to the portable components of different sizes, and the charging requirements of one base compatible with the portable components of different sizes may be met, thereby reducing the number of bases of different models that need to be produced, and further reducing the production cost.

In some embodiments, the charging structure may further include a charging slot recessed inward from the charging platform 21. The charging slot may be used to at least receive a portion of the portable component 1 to charge the portable component. Similar to the charging protrusion, the charging slot may also have any appropriate structure, which will not be repeated in herein. In some embodiments, the charging structure may further include a charging surface flush with a surface of the charging platform 21. In this way, the selection is made according to different application scenarios and user needs to meet the charging needs of portable devices, thereby improving the convenience and efficiency of charging.

In some embodiments, as shown in Fig. 2, the charging apparatus may adopt a wired charging method. Specifically, in some embodiments, the base 2 may include a pair of charging pins 24 for contacting with a charging interface of the portable component to charge the portable component. In some embodiments, the charging pins 24 may have a long strip shape, which corresponds to the charging interface of the portable component to be charged. It should be understood that the charging pins 24 may also have any other appropriate shape corresponding to the charging interface of the portable component.

In some embodiments, for example, in embodiments where the charging structure is the charging protrusion, the pair of charging pins 24 may be disposed along the axial direction of the charging protrusion 22 and disposed on a side of the charging protrusion 22 close to the flexible connector 1 at a distance from each other, so as to be able to contact with the charging interface of the portable component, thereby charging the portable component. In this way, the charging pins 24 are in direct contact with the charging interface of the portable component, thereby reducing the loss of energy during the transmission process, and the charging efficiency is higher.

In some embodiments, the charging apparatus may also adopt a wireless charging method. Specifically, in some embodiments, alternatively or additionally, the base 2 may further include a charging coil. The charging coil may be disposed in the charging structure. For example, the charging coil may be disposed in the charging protrusion, the charging slot and/or the charging surface. The charging coil may be coupled with a receiving coil in the portable component to charge the portable component. In this way, the portable component only needs to be coupled to the charging structure, and charging may be automatically started without aligning the charging interface, thereby greatly improving the convenience of use.

In some embodiments, the charging apparatus may further include a plurality of mating magnetic members. The plurality of mating magnetic members are respectively disposed in the base 2 and the top cover 3. For example, the mating magnetic member may be disposed adjacent to at least one of the coupling surface 31 of the top cover 3 and the charging platform 21 of the base 2; and disposed adjacent to at least one of the upper surface 33 of the top cover 3 and the bottom surface 23 of the base 2.

In some embodiments, the coupling surface 31 and the charging platform 21 may both include mating magnetic members. In this case, polarities of the mating magnetic members on the coupling surface 31 and the charging platform 21 adjacent to an outer end may be opposite, so as to attract each other to hold the charging apparatus in the charging case mode. In some alternative embodiments, one of the coupling surface 31 and the charging platform 21 includes a mating magnetic member, and the other includes an iron plate, so that a similar effect may also be achieved.

In some embodiments, similar to the coupling surface 31 and the charging platform 21, the upper surface 33 and the bottom surface 23 may both include mating magnetic members, or one may include a magnetic member and the other may include an iron plate. With this arrangement, the charging apparatus may be held in the charging case mode or the charging base mode by magnetic attraction, and the positioning is accurate and the opening and closing are convenient.

In some embodiments, the coupling surface 31 of the top cover 3 has a same shape and an area as the charging platform 21, and the upper surface 33 has a same contour as the bottom surface 23. The appearance of the charging apparatus is more symmetrical, simple and beautiful. In some embodiments, the coupling surface 31 and the upper surface 33 of the top cover 3, and the charging platform 21 and the bottom surface 23 of the base 2 may all have circular surfaces, and the coupling surface 31 or the charging platform 21 has a larger diameter than the upper surface 33 or the bottom surface 23, and the peripheral surface of the top cover 3 or the base 2 may be in a form of an arc surface or a bevel surface transition, so as to improve the portability of the entire charging apparatus and at the same time improve the aesthetics of the charging apparatus. Certainly, it should be understood that in some alternative embodiments, the coupling surface 31 and the upper surface 33 of the top cover 3, and the charging platform 21 and the bottom surface 23 of the base 2 may also have any other appropriate shape or structure, which will not be repeated in the following.

In some embodiments, the charging apparatus may further include an energy storage battery. The energy storage battery is disposed in at least one of the base 2 and the top cover 3. That is, the energy storage battery may be disposed in the base 2 or the top cover 3, or the energy storage batteries may be disposed in both the base 2 and the top cover 3 to charge the portable component.

In some embodiments, a charging interface is disposed on a side of the top cover 3 close to the flexible connector 1 for connecting to a charging cable. In some embodiments, the flexible connector 1 is a flat cable, and a through hole 11 is disposed on a side close to the top cover 3, and the charging cable may pass through the through hole 11 and then be connected to the charging interface. In this way, the charging interface is arranged on one side of the flexible connector 1, thereby reducing the exposure of the charging interface and making the appearance of the charging case simpler and more elegant.

In some embodiments, the charging apparatus may further include a light-transmitting area 6 and an indicator light. The light-transmitting area 6 may be formed on the base 2, and the indicator light is disposed in the base 2 and adjacent to the light-transmitting area, so as to indicate an operating state of the charging apparatus to an exterior through the light-transmitting area. For example, the indicator light may indicate a charging state. When the indicator light is displayed in orange, it indicates that charging is in progress, and when the indicator light is displayed in green, it indicates that charging is completed. In this way, an intuitive and convenient way is provided to know the state of the charging case, thereby improving the user experience and the usability of the device.

In some embodiments, the light-transmitting area may be a transparent area or a semi-transparent area formed on the charging platform 21 of the base 2. In this way, the light-transmitting area may make the display effect clear and bright, and the semi-transparent area may make the light softer, so as to meet the needs of different scenarios. In addition, the light-transmitting area adopting the transparent or semi-transparent area may effectively indicate the state outward while improving the waterproof performance of the entire charging apparatus. In some alternative embodiments, the light-transmitting area may also include a light-transmitting hole.

Various implementations of the present disclosure have been described above, and the above description is example, not exhaustive, and is not limited to the disclosed implementations. Many modifications and variations will be apparent to those of ordinary skill in the art without departing from the scope of the described implementations. The selection of terms used herein is intended to best explain the principles, practical applications or improvements to the technology in the market of each implementation, or to enable other ordinary skilled persons in the art to understand each implementation disclosed herein.

## Claims

1. A charging apparatus for a portable component, comprising:
a base (2) comprising a charging platform (21) and a charging structure disposed on the charging platform (21), the charging structure being adapted to couple with the portable component to charge the portable component;
a top cover (3) comprising a coupling surface (31), a receiving cavity (32) recessed from the coupling surface (31) and an upper surface (33) axially opposite to the coupling surface (31), the receiving cavity (32) being adapted to at least receive the portable component; and
a flexible connector (1) connecting the base (2) and the top cover (3) and allowing one of the base (2) and the top cover (3) to flip relative to the other to switch the charging apparatus between a charging case mode and a charging base mode, wherein in the charging case mode, the coupling surface of the top cover (3) abuts against the charging platform (21) of the base (2), and in the charging base mode, the upper surface of the top cover (3) abuts against a bottom surface (23) of the base (2).

2. The charging apparatus of claim 1, wherein a first end of the flexible connector (1) is connected to a peripheral outer edge of the base (2) and a side axially close to the charging platform (21), and a second end of the flexible connector (1) is connected to a peripheral outer edge of the top cover (3) and a side axially close to the coupling surface (31).

3. The charging apparatus of claim 1, further comprising:
a connecting cable disposed in the flexible connector (1) to at least electrically connect electronic devices in the base (2) and the top cover (3).

4. The charging apparatus of claim 1, wherein the base (2) further comprises:
a charging magnetic member disposed in the charging structure and adapted to couple with a magnetic member in the portable component (10) to position the portable component.

5. The charging apparatus of any of claims 1 to 4, wherein the charging structure comprises at least one of:
a charging protrusion protruding outward from the charging platform (21);
a charging slot recessed inward from the charging platform (21); or
a charging surface flush with a surface of the charging platform (21).

6. The charging apparatus of claim 5, wherein an outer diameter of the charging protrusion (22) is smaller than inner diameters of portable components of various specifications.

7. The charging apparatus of claim 5, wherein the charging structure comprises:
a pair of charging pins (24) adapted to contact with a charging interface of the portable component to charge the portable component.

8. The charging apparatus of claim 7, wherein the pair of charging pins (24) are arranged along an axial direction of the charging protrusion (22) and disposed on a side of the charging protrusion (22) close to the flexible connector (1) at a distance from each other.

9. The charging apparatus of any of claims 1 to 4 and 6 to 8, wherein the base (2) further comprises:
a charging coil disposed in the charging structure and adapted to couple with a receiving coil in the portable component to charge the portable component.

10. The charging apparatus of any of claims 1 to 4 and 6 to 8, further comprising:
a plurality of mating magnetic members respectively disposed in the base (2) and the top cover (3), and disposed adjacent to at least one of the coupling surface (31) of the top cover (3) and the charging platform (21) of the base (2) and adjacent to at least one of the upper surface (33) of the top cover (3) and the bottom surface (23) of the base (2), to hold the charging apparatus in the charging case mode or the charging base mode by magnetic attraction.

11. The charging apparatus of any of claims 1 to 4 and 6 to 8, wherein the coupling surface (31) of the top cover (3) has a same shape and a same area as the charging platform (21), and the upper surface (33) has a same contour as the bottom surface (23).

12. The charging apparatus of any of claims 1 to 4 and 6 to 8, further comprising:
an energy storage battery disposed in at least one of the base (2) and the top cover (3) to charge the portable component.

13. The charging apparatus of any of claims 1 to 4 and 6 to 8, wherein a charging interface is disposed on a side of the top cover close to the flexible connector and is adapted to connect to an external charging cable.

14. The charging apparatus of any of claims 1 to 4 and 6 to 8, wherein the flexible connector (1) is a flat cable, and a through hole (11) is disposed on a side close to the top cover (3) and is adapted to allow the charging cable to pass through to connect to the charging interface.

15. The charging apparatus of any of claims 1 to 4 and 6 to 8, further comprising:
a light-transmitting area (6) formed on the base (2); and
an indicator light disposed in the base and adjacent to the light-transmitting area to indicate an operating state of the charging apparatus to an exterior through the light-transmitting area.
